# FASCICULE DE BREVET EUROPEEN

(11) **EP 2 049 332 B1**
(45) Date de publication et mention de la délivrance du brevet: **16.03.2011**
(21) Numéro de dépôt: 07823699.9
(22) Date de dépôt: 07.08.2007
(51) Int. Cl.: B32B 27/30, B32B 1/08, F24D 3/14, B32B 27/32, C08L 27/12, F16L 11/04

(54) **TUBE MULTICOUCHE POUR LE TRANSPORT D'EAU OU DE GAZ.**
MEHRSCHICHTRÖHRE ZUM TRANSPORT VON WASSER ODER GAS
MULTILAYER TUBE FOR TRANSPORTING WATER OR GAS

(30) Priorité: 08.08.2006 FR 0653319
(43) Date de publication de la demande: 22.04.2009
(73) Titulaire: ARKEMA FRANCE, 92700 Colombes (FR)
(72) Inventeur: BONNET, Anthony, F-27170 Beaumont-Le-Roger (FR); LAPPRAND, Aude, F-27300 Bernay (FR); SEBIRE, Pascal, F-27300 Saint-Aubin Le Vertueux (FR)
(74) Mandataire: Lhoste, Catherine
(86) Numéro de dépôt international: PCT/FR2007/051793
(87) Numéro de publication internationale: WO 2008/017790

(56) Documents cités:
- EP-A- 1 508 927
- EP-A- 1 541 343
- EP-A- 1 627 731

## Description

### [Domaine de l'invention]

La présente invention concerne un tube multicouche comprenant une couche d'un PVDF fonctionalisé obtenu par le greffage par irradiation d'au moins un monomère insaturé sur un PVDF et une couche d'une polyoléfine. La polyoléfine peut être un polyéthylène, notamment du polyéthylène haute densité (PEHD) ou un polyéthylène réticulé (noté PEX). Le tube peut être utilisé pour le transport de liquides, en particulier de l'eau chaude, ou de gaz. L'invention est aussi relative aux utilisations de ce tube.

### [Problème technique]

Les tubes en acier ou en fonte sont de plus en plus remplacés par des équivalents en matière plastique. Les polyoléfines, notamment les polyéthylènes, sont des thermoplastiques très utilisés car ils présentent de bonnes propriétés mécaniques, ils se transforment et permettent de souder les tubes entre eux facilement. Les polyoléfines sont largement utilisées pour la fabrication de tubes pour le transport de l'eau ou du gaz de ville. Quand le gaz est sous une pression élevée (> 10 bar, voire plus), il est nécessaire que la polyoléfine soit résistante mécaniquement aux contraintes exercées par le gaz sous pression.

De plus, la polyoléfine peut être soumise à un milieu chimique agressif. Par exemple, dans le cas du transport de l'eau, celle-ci peut contenir des additifs ou des produits chimiques agressifs (par exemple de l'ozone, des dérivés chlorés utilisés pour la purification de l'eau comme l'eau de javel qui sont oxydants, surtout à chaud). Ces additifs ou produits chimiques peuvent endommager la polyoléfine au cours du temps, surtout lorsque l'eau transportée est à une température élevée (c'est le cas dans les circuits de chauffage ou bien dans les réseaux d'eau pour lesquels l'eau est portée à une température élevée pour éliminer les germes, bactéries ou microorganismes). Un problème qu'entend résoudre l'invention est donc de mettre au point un tube résistant chimiquement.

Un autre problème qu'entend résoudre l'invention est que le tube ait des propriétés barrière. On entend par barrière le fait que le tube freine la migration vers le fluide transporté de contaminants présents dans le milieu extérieur ou bien de contaminants (tels que des antioxydants ou des résidus de polymérisation) présents dans la polyoléfine. On entend par barrière aussi le fait que le tube freine la migration de l'oxygène ou des additifs présents dans le fluide transporté vers la couche de polyoléfine.

Il est également nécessaire que le tube présente de bonnes propriétés mécaniques en particulier une bonne résistance à l'impact et que les couches adhèrent bien entre elles (pas de délamination).

La Demanderesse a mis au point un tube multicouche qui répond aux problèmes posés. Ce tube présente notamment une bonne résistance chimique vis-à-vis du fluide transporté ainsi que les propriétés barrière mentionnées plus haut.

### [Art antérieur]

Le document EP 1484346 publié le 08 décembre 2004 décrit des structures multicouches comprenant un polymère fluoré fonctionalisé obtenu par greffage par irradiation. Les structures peuvent se présenter sous la forme de bouteilles, réservoirs, conteneurs ou tuyaux. La structure du tube multicouche selon l'invention n'apparaît pas dans ce document.

Le document EP 1541343 publié le 08 juin 2005 décrit une structure multicouche à base d'un polymère fluoré fonctionalisé obtenu par greffage par irradiation pour stocker ou transporter des produits chimiques. On entend dans cette demande par produit chimique des produits qui sont corrosifs ou dangereux, ou bien des produits dont on veut maintenir la pureté. La structure du tube multicouche selon l'invention n'apparaît pas dans ce document.

Le document US 6016849 publié le 25 juillet 1996 décrit un tube plastique présentant une adhérence entre la couche interne et la couche protectrice externe entre 0,2 et 0,5 N/mm. Il n'est pas fait mention de polymère fluoré fonctionalisé obtenu par greffage par irradiation

Les documents US 2004/0206413 et WO 2005/070671 décrivent un tube multicouche comprenant une gaine de métal. Il n'est pas fait mention de un polymère fluoré fonctionalisé obtenu par greffage par irradiation.

### [Brève description de l'invention]

L'invention est relative à un tube multicouche qui selon la 1^{ère} forme comprend (dans l'ordre de l'intérieur vers, l'extérieur du tube) disposées l'une contre l'autre :
- éventuellement une couche L₁ comprenant au moins un polymère fluoré, de préférence un PVDF ;
- une couche L₂ comprenant au moins un PVDF fonctionalisé, obtenu par le greffage par irradiation d'au moins un monomère polaire insaturé sur un PVDF ;
- éventuellement une couche L₃ d'un liant d'adhésion ;
- une couche L₄ comprenant au moins une polyoléfine éventuellement mélangée à au moins une polyoléfine fonctionalisée ;
- éventuellement une couche barrière L₅ ;
- éventuellement une couche L₆ comprenant au moins une polyoléfine, éventuellement en mélange avec au moins une polyoléfine fonctionalisée ;
   caractérisé en ce que le PVDF sur lequel est greffé le monomère polaire insaturé est un copolymère du VDF dont la teneur en poids est d'au moins 50%, de préférence au moins 75% et d'au moins un monomère copolymérisable avec le VDF, présentant les caractéristiques suivantes :
- une température de cristallisation Tc (mesurée par DSC selon la norme ISO 11357-3) allant de 50 à 120°C, de préférence de 85 à 110°C ;
- une contrainte au seuil σy allant de 10 à 40 MPa, de préférence de 10à30MPa;
- une viscosité v à l'état fondu (mesurée au rhéomètre capillaire à 230°C à 100 s⁻¹) allant de 100 à 1500 Pa s, de préférence de 400 à 1200 Pa s.

Selon une 2^{ème} forme, le tube multicouche comprend (dans l'ordre de l'intérieur vers l'extérieur du tube) disposées l'une contre l'autre :
- éventuellement une couche L'₁ comprenant au moins un polymère fluoré, de préférence un PVDF ;
- une couche L'₂ comprenant au moins un PVDF fonctionalisé, obtenu par le greffage par irradiation d'au moins un monomère insaturé sur un PVDF;
- une couche barrière L'₃ comprenant un polymère barrière choisi parmi l'EVOH ou un mélange à base d'EVOH, le PGA ou le PDMK ;
- éventuellement une couche L'₄ d'un liant d'adhésion ;
- une couche L'₅ comprenant au moins une polyoléfine, éventuellement en mélange avec au moins une polyoléfine fonctionalisée ;
- éventuellement une couche barrière L'₆ ;
- éventuellement une couche L'₇ comprenant au moins une polyoléfine, éventuellement en mélange avec au moins une polyoléfine fonctionalisée ;
   caractérisé en ce que le PVDF sur lequel est greffé le monomère polaire insaturé est un copolymère du VDF dont la teneur en poids est d'au moins 50%, de préférence au moins 75% et d'au moins un monomère copolymérisable avec le VDF, présentant les caractéristiques suivantes :
- une température de cristallisation Tc (mesurée par DSC selon la norme ISO 11357-3) allant de 50 à 120°C, de préférence de 85 à 110°C ;
- une contrainte au seuil σy allant de 10 à 40 MPa, de préférence de 10à30MPa;
- une viscosité v à l'état fondu (mesurée au rhéomètre capillaire à 230°C à 100 s⁻¹) allant de 100 à 1500 Pa s, de préférence de 400 à 1200 Pa s.

L'invention est aussi relative à l'utilisation du tube multicouche pour le transport de l'eau, notamment de l'eau chaude, de produits chimiques, d'un gaz., notamment pour véhiculer l'eau chaude dans un chauffage radiant par le sol (plancher radiant) ou pour véhiculer l'eau chaude vers un élément radiant.

### [Description détaillée de l'invention]

**S'agissant du PVDF qui est modifié,** celui-ci est un copolymère du VDF (fluorure de vinylidène, CH₂=CF₂) dont la teneur en poids est d'au moins 50%, de préférence au moins 75% et d'au moins un monomère copolymérisable avec le VDF. Le comonomère peut être par exemple le fluorure de vinyle (VF), le trifluoroéthylène, le chlorotrifluoroéthylène (CTFE), le 1,2-difluoroéthylène, le tétrafluoroéthylène (TFE), l'hexafluoropropène (HFP), le 3,3,3-trifluoropropène et le 2-trifluorométhyl-3,3,3-trifluoro-1-propène. De préférence, pour des raisons de facilité d'extrusion, il s'agit d'un PVDF thermoplastique.

On préfère les copolymères VDF-HFP dont la teneur en poids en HFP varie de 4 à 22%, de préférence de 10 à 20% (teneur calculée avant le greffage du monomère polaire insaturé).

Le PVDF présente de plus les caractéristiques suivantes (avant de subir le greffage) :
- une température de cristallisation Tc (mesurée par DSC selon la norme ISO 11357-3) allant de 50 et 120°C, de préférence de 85 à 110°C;
- une contrainte au seuil σy allant de 10 à 40 MPa, de préférence de 10à30MPa;
- une viscosité v à l'état fondu (mesurée au rhéomètre capillaire à 230°C à 100 s⁻¹) allant de 100 à 1500 Pa s, de préférence de 400 à 1200 Pa s.

Il présente aussi avant greffage un module d'Young en traction (ASTM D-638) qui va de préférence de 200 à 1000 MPa, de préférence de 200 à 600 MPa.

Par rapport au grade KYNARFLEX^{®} 2801 qui est décrit dans EP 1508927, le PVDF qui est modifié présente au départ une viscosité v inférieure, ce qui signifie qu'après la modification, la viscosité du PVDF fonctionalisé est aussi inférieure au KYNARFLEX^{®} 2801 modifié. Ceci facilite la mise en oeuvre du PVDF fonctionalisé que ce soit à l'état fondu ou bien en solution dans un solvant.

Le PVDF fonctionalisé ou le mélange présentent par rapport aux PVDF fonctionalisés de l'art antérieur, les avantages suivants :
- une plus forte adhésion de la couche comprenant le PVDF fonctionalisé avec les couches qui lui sont en contact ;
- une plus grande facilité de mise en oeuvre que ce soit à l'état fondu ou en solution dans un solvant ;
- il permet également une plus grande vitesse de coextrusion.

Les grades KYNARFLEX^{®} 2500 et 2750 commercialisés par ARKEMA sont des exemples de PVDF adaptés :
caractéristiques du KYNARFLEX^{®} 2500
   copolymère VDF-HFP ayant 19% d'HFP
   Tc : 87,4°C
   σy : 15 MPa
   v : 1000 Pa.s
   module d'Young traction: 220 MPa.
caractéristiques du KYNARFLEX^{®} 2750
   copolymère VDF-HFP ayant 16% d'HFP
   Tc : 103°C
   σy: 18 MPa
   v : 900 Pa.s
   module d'Young traction: 360 MPa
**S'agissant du PVDF fonctionalisé**, celui-ci est obtenu par le greffage sous irradiation d'au moins un monomère polaire insaturé sur le PVDF défini ci-dessus. On parlera par la suite de PVDF fonctionalisé.

Le procédé comprend les étapes suivantes :
a). le PVDF est au préalable mélangé au monomère polaire insaturé par toutes les techniques de mélange en milieu fondu connues de l'art antérieur. L'étape de mélange s'effectue dans tout dispositif de mélange tel que des extrudeuses ou des malaxeurs utilisés dans l'industrie des thermoplastiques. De préférence, on utilisera une extrudeuse pour mettre le mélange sous forme de granulés. Le greffage a donc lieu sur un mélange (dans la masse) et non à la surface d'une poudre comme cela est par exemple décrit dans le document US 5576106. La proportion de PVDF est comprise, en poids, de 80 à 99,9%, de préférence de 90 à 99% pour respectivement 0,1 à 20%, de préférence 1 à 10% de monomère polaire insaturé.
b). puis, le mélange est irradié (irradiation β ou γ) à l'état solide à l'aide d'une source électronique ou photonique sous une dose d'irradiation comprise entre 10 et 200 kGray, de préférence entre 10 et 150 kGray. Le mélange peut par exemple être conditionné en sacs de polyéthylène, l'air est chassé puis les sacs sont fermés. Avantageusement la dose est comprise entre 2 et 6 Mrad et de préférence entre 3 et 5 Mrad. L'irradiation grâce à une bombe au cobalt 60 est particulièrement préférée.
   La teneur en monomère polaire insaturé qui est greffé est comprise, en poids, entre 0,1 à 5% (c'est-à-dire que le monomère polaire insaturé greffé correspond à 0,1 à 5 parts pour 99,9 à 95 parts de PVDF), avantageusement de 0,5 à 5%, de préférence de 0,9 à 5%. Cette teneur dépend de la teneur initiale du monomère polaire insaturé dans le mélange à irradier. Elle dépend aussi de l'efficacité du greffage, donc de la durée et de l'énergie de l'irradiation.
c). le monomère polaire insaturé qui n'a pas été greffé ainsi que les résidus libérés par le greffage notamment le HF peuvent ensuite être éventuellement éliminés. Cette dernière étape peut être rendue nécessaire si le monomère polaire insaturé non-greffé est susceptible de nuire à l'adhésion ou bien pour des problèmes de toxicologie. Cette opération peut être réalisée selon les techniques connues de l'homme de l'art. Un dégazage sous vide peut être appliqué, éventuellement en appliquant en même temps un chauffage. Il est également possible de dissoudre le PVDF fonctionalisé dans un solvant adéquat tel que par exemple la N-méthyl pyrrolidone, puis de le précipiter dans un non-solvant, par exemple dans l'eau ou bien dans un alcool, ou bien de laver le PVDF fonctionalisé à l'aide d'un solvant inerte vis-à-vis du polymère fluoré et des fonctions greffées. Par exemple, quand on greffe de l'anhydride maléique, on peut laver avec du chlorobenzène.

C'est là l'un des avantages de ce procédé de greffage par irradiation que de pouvoir obtenir des teneurs en monomère polaire insaturé greffé plus élevées qu'avec les procédés de greffage classiques utilisant un amorceur radicalaire. Ainsi, typiquement, avec le procédé de greffage par irradiation, il est possible d'obtenir des teneurs supérieures à 1% (1 part de monomère insaturé pour 99 parts du PVDF), voire même supérieure à 1,5%, ce qui n'est pas possible avec un procédé de greffage classique en extrudeuse

D'autre part, le greffage par irradiation a lieu à « froid », typiquement à des températures inférieures à 100°C, voire 50°C, de sorte que le mélange à irradier n'est pas à l'état fondu comme pour un procédé de greffage classique en extrudeuse. Une différence essentielle est que le greffage a lieu dans la phase amorphe et non dans la phase cristalline alors qu'il se produit un greffage homogène dans le cas d'un greffage en extrudeuse à l'état fondu. Le monomère polaire insaturé ne se répartit donc pas identiquement sur les chaînes du PVDF dans le cas du greffage par irradiation et dans le cas du greffage en extrudeuse. Le PVDF fonctionalisé présente donc une répartition différente du monomère polaire insaturé sur les chaînes de PVDF par rapport à un produit qui serait obtenu par un greffage en extrudeuse.

Durant cette étape de greffage, il est préférable d'éviter la présence d'oxygène. Un balayage à l'azote ou à l'argon du mélange à irradier est donc possible pour éliminer l'oxygène. Le PVDF fonctionalisé présente la très bonne résistance chimique et à l'oxydation, ainsi que la bonne tenue thermomécanique, du copolymère avant sa modification.

Le PVDF fonctionalisé peut être utilisé seul ou bien en mélange avec un autre PVDF, qui peut être un PVDF homo- ou copolymère. De préférence, on choisit cet autre PVDF de façon à ce que les deux polymères fluorés soient compatibles et que le mélange ne présente qu'un seul pic de fusion par DSC. De préférence, l'autre PVDF est un copolymère du VDF et d'au moins un monomère copolymérisable avec le VDF ayant une teneur en poids en VDF d'au moins 50%, de préférence d'au moins 75% et qui présente les mêmes caractéristiques thermiques et mécaniques spécifiées plus haut pour le PVDF qui est modifié. Le mélange comprend en poids de 1 à 99%, de préférence de 50 à 99% du PVDF fonctionalisé pour respectivement de 99 à 1%, de préférence de 1 à 50% d'un autre PVDF. Le mélange peut être préparé en milieu fondu à l'aide d'un outil de mélanges adapté aux thermoplastiques, par exemple à l'aide d'une extrudeuse.

**S'agissant du monomère polaire insaturé,** celui-ci possède une double liaison C=C ainsi qu'au moins une fonction polaire qui peut être une fonction :
- acide carboxylique,
- sel d'acide carboxylique,
- anhydride d'acide carboxylique,
- époxyde,
- ester d'acide carboxylique,
- silyle,
- alcoxysilane,
- amide carboxylique,
- hydroxy,
- isocyanate.
Des mélanges de plusieurs monomères sont également envisageables.

Des acides carboxyliques insaturés ayant 4 à 10 atomes de carbone et leurs dérivés fonctionnels, particulièrement leurs anhydrides, sont des monomères insaturés particulièrement préférés. Citons à titre d'exemples de monomères insaturés l'acide méthacrylique, l'acide acrylique, l'acide maléique, l'acide fumarique, l'acide itaconique, l'acide citraconique, l'acide undécylénique, l'acide allylsuccinique, l'acide cyclohex-4-ène-1,2-dicarboxylique, l'acide 4-méthyl-' cyclohex-4-ène-1,2-dicarboxylique, l'acide bicyclo(2,2,1)hept-5-ène-2,3-dicarboxylique, l'acide x-méthylbicyclo(2,2,1-hept-5-ène-2,3-dicarboxylique, l'undécylénate de zinc, de calcium ou de sodium, l'anhydride maléique, l'anhydride itaconique, l'anhydride citraconique, l'anhydride dichloromaléique, l'anhydride difluoromaléique, l'anhydride crotonique, l'acrylate ou le méthacrylate de glycidile, l'allyl glycidyl éther, les vinyles silanes tel que le vinyl triméthoxysilane, le vinyl triéthoxysilane, le vinyl triacétoxysilane, le γ-méthacryloxypropyltriméthoxysilane.

D'autres exemples de monomères comprennent des esters alkyliques le groupe alkyle étant en C₁-C₈ ou des dérivés esters glycidyliques des acides carboxyliques insaturés tels que l'acrylate de méthyle, le méthacrylate de méthyle, l'acrylate d'éthyle, le méthacrylate d'éthyle, l'acrylate de butyle, le méthacrylate de butyle, l'acrylate de glycidyle, le méthacrylate de glycidyle, le maléate de mono-éthyle, le maléate de diéthyle, le fumarate de monométhyle, le fumarate de diméthyle, l'itaconate de monométhyle, et l'itaconate de diéthyle ; des dérivés amides des acides carboxyliques insaturés tels que l'acrylamide, le méthacrylamide, le monoamide maléique, le diamide maléique, le N-monoéthylamide maléique, le N,N-diéthylamide maléique, le N-monobutylamide maléique, le N,N-dibutylamide maléique, le monoamide furamique, le diamide furamique, le N-monoéthylamide fumarique, le N,N-diéthylamide fumarique, le N-monobutylamide fumarique et le N,N-dibutylamide furamique ; des dérivés imides des acides carboxyliques insaturés tels que le maléimide, le N-butylmaléimide et le N-phénylmaléimide ; et des sels métalliques d'acides carboxyliques insaturés tels que l'acrylate de sodium, le méthacrylate de sodium, l'acrylate de potassium, le méthacrylate de potassium et les undécylénate de zinc, calcium ou sodium.

On exclut les monomères qui présentent deux doubles liaisons C=C qui pourraient conduire à une réticulation du polymère fluoré, comme par exemple les di- ou triacrylates. De ce point de vue, l'anhydride maléique tout comme les undécylénates de zinc, calcium et sodium sont préférés car ils ont peu tendance à homopolymériser ni même à donner lieu à une réticulation.

Avantageusement, on utilise l'anhydride maléique. Ce monomère offre en effet les avantages suivants :
- il est solide et peut être facilement introduit avec les granulés de polymère fluoré avant le mélange à l'état fondu,
- étant solide, il est aussi plus facilement manipulable (il est notamment peu volatil),
- il permet d'obtenir de bonnes propriétés d'adhésion,
- il est particulièrement réactif vis-à-vis de nombreuses fonctions chimiques,
- à la différence d'autres monomères insaturés comme l'acide (méth)acrylique ou les esters acryliques, il n'homopolymérise pas et n'a pas à être stabilisé.

Dans le mélange à irradier, la proportion de PVDF est comprise, en poids, entre 80 à 99,9% pour respectivement 0,1 à 20% de monomère insaturé. De préférence la proportion de PVDF est de 90 à 99% pour respectivement 1 à 10% de monomère polaire insaturé.

**S'agissant du polymère fluoré,** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère, on peut citer le fluorure de vinyle; le fluorure de vinylidène (VDF, CH₂=CF₂); le trifluoroéthylène (VF₃); le chlorotrifluoroéthylène (CTFE); le 1,2-difluoroéthylène; le tétrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD); le produit de formule CF₂=CFOCF₂CF(CF₃)OCF₂CF₂X dans laquelle X est SO₂F, CO₂H, CH₂OH, CH₂OCN ou CH₂OPO₃H; le produit de formule CF₂=CFOCF₂CF₂SO₂F; le produit de formule F(CF₂)ₙCH₂OCF=CF₂ dans laquelle n est 1, 2, 3, 4 or 5; le produit de formule R₁CH₂OCF=CF₂ dans laquelle R₁ est l'hydrogène où F(CF₂)z et z vaut 1, 2, 3 ou 4; le produit de formule R₃OCF=CH₂ dans laquelle R₃ est F(CF₂)_{z}- et z est 1, 2, 3 or 4; le perfluorobutyl éthylène (PFBE); le 3,3,3-trifluoropropène et le 2-trifluorométhyl-3,3,3 -trifluoro-1-propène.

Le polymère fluoré peut être un homopolymère ou un copolymère, il peut aussi comprendre des monomères non fluorés tels que l'éthylène ou le propylène.

A titre d'exemple, le polymère fluoré est choisi parmi :
- les homo- et copolymères du fluorure de vinylidène (VDF, CH₂=CF₂) contenant au moins 50% en poids de VDF. Le comonomère du VDF peut être choisi parmi le chlorotrifluoroéthylène (CTFE), l'hexafluoropropylène (HFP), le-trifluoroéthylène (VF₃) et le tétrafluoroéthylène (TFE) ;
- les copolymères du TFE et de l'éthylène (ETFE) ;
- les homo- et copolymères du trifluoroéthylène (VF₃) ;
- les copolymères du type EFEP associant le VDF et le TFE (notamment les EFEP de la société DAIKIN) ;
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF₃.

Avantageusement, le polymère fluoré est un PVDF homo- ou copolymère. Ce polymère fluoré présente en effet une bonne résistance chimique, notamment aux UV et aux produits chimiques, et il se transforme facilement (plus facilement que le PTFE ou les copolymères de type ETFE). De préférence le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 4000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et à l'injection. De préférence, le PVDF a une viscosité allant de 300 Pa.s à 1200 Pa.s, la viscosité étant mesurée à 230°C, à un gradient de cisaillement de 100 s⁻¹ à l'aide d'un rhéomètre capillaire.

**S'agissant de la polyoléfine,** on désigne par ce terme un polymère comprenant majoritairement des motifs éthylène et/ou propylène. Il peut s'agir d'un polyéthylène, homo- ou copolymère, le comonomère étant choisi parmi le propylène, le butène, l'héxène ou l'octène. Il peut s'agir aussi d'un polypropylène, homo- ou copolymère, le comonomère étant choisi parmi l'éthylène, le butène, l'héxène ou l'octène.

Le polyéthylène peut être notamment le polyéthylène haute densité (PEHD), basse densité (PEBD), le polyéthylène basse densité linéaire (LLDPE), le polyéthylène très basse densité (VLDPE). Le polyéthylène peut être obtenu à l'aide d'un catalyseur Ziegler-Natta, Phillips ou de type métallocène ou encore par le procédé haute-pression. Le polypropylène est un polypropylène iso- ou syndiotactique.

Il peut s'agir aussi d'un polyéthylène réticulé (noté PEX). Le polyéthylène réticulé peut être par exemple un polyéthylène comprenant des groupements silanes hydrolysables (comme décrit dans les demandes WO 01/53367 ou US 20040127641 A1) qui a ensuite été réticulé après réaction entre eux des groupements silanes. La réaction des groupements silanes Si-OR entre eux conduit à des liaisons Si-O-Si qui relient les chaînes de polyéthylène entre elles. La teneur en groupements silanes hydrolysables peut être au moins de 0,1 groupements silanes hydrolysables pour 100 unités -CH₂- (déterminée par analyse infrarouge). Le polyéthylène peut aussi être réticulé à l'aide de radiations, par exemple de radiations gamma. Il peut s'agir aussi d'un polyéthylène réticulé à l'aide d'un amorceur radicalaire de type peroxyde. On pourra donc utiliser un PEX de type A (réticulation à l'aide d'un amorceur radicalaire), de type B (réticulation à l'aide de groupements silanes) ou de type C (réticulation par irradiation).

Il peut s'agir aussi d'un poléthylène dit bimodal, c'est-à-dire composé d'un mélange de polyéthylènes présentant des masses moléculaires moyennes différentes comme enseigné dans le document WO 00/60001**.** Le polyéthylène bimodal permet par exemple d'obtenir un compromis très intéressant de résistance aux chocs et au « stress-cracking » ainsi qu'une bonne rigidité et une bonne tenue à la pression.

Pour les tubes devant résister à la pression, notamment les tubes de transport de gaz sous pression ou de transport d'eau, on pourra utiliser avantageusement un polyéthylène qui présente une bonne résistance à la propagation lente de fissure (SCG) et à la propagation rapide de fissure (RCP). Le grade HDPE XS 10 B commercialisé par TOTAL PETROCHEMICALS présente une bonne résistance à la fissure (lente ou rapide). Il s'agit d'un PEHD contenant de l'hexène' comme comonomère, ayant une densité de 0,959 g/cm³ (ISO 1183), un MI-5 de 0,3 dg/min (ISO 1133), un HLMI de 8 dg/min (ISO 1133), une résistance hydrostatique longue durée de 11,2 MPa selon **ISO/DIS 9080,** une résistance à la propagation lente de fissures sur tuyaux entaillés supérieure à 1000 heures selon **ISO/DIS 13479.**

**S'agissant de la polyoléfine fonctionalisée**, on désigne par ce terme un copolymère de l'éthylène et/ou du propylène et d'au moins un monomère insaturé de la liste précédente.

Le monomère insaturé est de préférence choisi parmi :
- les (méth)acrylates d'alkyle en C₁-C₈, notamment le (méth)acrylate de méthyle, d'éthyle, de propyle, de butyle, de 2-éthylhexyle, d'isobutyle, de cyclohexyle ;
- les acides carboxyliques insaturés, leurs sels et leurs anhydrides, notamment l'acide acrylique, l'acide méthacrylique, l'anhydride maléique, l'anhydride itaconique, l'anhydride citraconique ;
- les époxydes insaturés, notamment les esters et éthers de glycidyle aliphatiques tels que l'allylglycidyléther, le vinylglycidyléther, le maléate et l'itaconate de glycidyle, l'acrylate et le méthacrylate de glycidyle, ainsi que les esters et éthers de glycidyle alicycliques ;
- les esters vinyliques d'acides carboxyliques saturés, notamment l'acétate de vinyle ou le propionate de vinyle.

La polyoléfine fonctionalisée peut être obtenue par copolymérisation de l'éthylène et d'au moins un monomère polaire insaturé choisi dans la liste précédente. La polyoléfine fonctionalisée peut être un copolymère de l'éthylène et d'un monomère polaire ou bien un terpolymère de l'éthylène et de deux monomères polaires insaturés. La copolymérisation s'opère à des pressions élevées supérieures à 1000 bar selon le procédé dit haute-pression. La polyoléfine fonctionnelle obtenue par copolymérisation comprend en poids de 50 à 99,9% d'éthylène, de préférence de 60 à 99,9%, encore plus préférentiellement de 65 à 99% et de 0,1 à 50%, de préférence de 0,1 à 40%, encore plus préférentiellement de 1 à 35% d'au moins un monomère polaire de la liste précédente.

A titre d'exemple, la polyoléfine fonctionalisée peut être un copolymère de l'éthylène et d'un époxyde insaturé, de préférence du (méth)acrylate de glycidyle, et éventuellement d'un (méth)acrylate d'alkyle en C₁-C₈ ou d'un ester vinylique d'acide carboxylique saturé. La teneur en poids en époxyde insaturé, notamment en (méth)acrylate de glycidyle, est comprise entre 0,1 et 50%, avantageusement entre 0,1 et 40%, de préférence entre 1 à 35%, encore plus préférentiellement entre 1 et 20%. Il pourra s'agir par exemple des polyoléfines fonctionalisées commercialisées par la société ARKEMA sous les références LOTADER^{®} AX8840 (8%poids de méthacrylate de glycidyle, 92%poids d'éthylène, indice de fluidité 5 selon ASTM D1238), LOTADER^{®} AX8900 (8%poids de méthacrylate de glycidyle, 25%poids d'acrylate de méthyle, 67%poids d'éthylène, indice de fluidité 6 selon ASTM D1238), LOTADER^{®} AX8950 (9%poids de méthacrylate de glycidyle, 15%poids d'acrylate de méthyle, 76%poids d'éthylène, indice de fluidité 85 selon ASTM D1238).

La polyoléfine fonctionalisée peut aussi être un copolymère de l'éthylène et d'un anhydride d'acide carboxylique insaturé, de préférence l'anhydride maléique, et éventuellement d'un (méth)acrylate d'alkyle en C₁-C₈ ou d'un ester vinylique d'acide carboxylique saturé. La teneur en poids en anhydride d'acide carboxylique, notamment en anhydride maléique, est comprise entre 0,1 et 50%, avantageusement entre 0,1 et 40%, de préférence entre 1 à 35%, encore plus préférentiellement entre 1 et 10%. Il pourra s'agir par exemple des polyoléfines fonctionalisées commercialisées par la société ARKEMA sous les références LOTADER^{®} 2210 (2,6%poids d'anhydride maléique, 6%poids d'acrylate de butyle et 91,4%poids d'éthylène, indice de fluidité 3 selon ASTM D1238), LOTADER^{®} 3340 (3%poids d'anhydride maléique, 16%poids d'acrylate de butyle et 81%poids d'éthylène, indice de fluidité 5 selon ASTM D1238), LOTADER^{®} 4720 (0,3%poids d'anhydride maléique, 30%poids d'acrylate d'éthyle et 69,7%poids d'éthylène, indice de fluidité 7 selon ASTM D1238), LOTADER^{®} 7500 (2,8%poids d'anhydride maléique, 20%poids d'acrylate de butyle et 77,2%poids d'éthylène, indice de fluidité 70 selon ASTM D1238), OREVAC 9309, OREVAC 9314, OREVAC 9307Y, OREVAC 9318, OREVAC 9304 ou OREVAC 9305.

On désigne aussi par polyoléfine fonctionalisée une polyoléfine sur laquelle est greffé par voie radicalaire un monomère polaire insaturé de la liste précédente. Le greffage a lieu en extrudeuse ou en solution en présence d'un amorceur radicalaire. A titre d'exemple d'amorceurs radicalaires, on pourra utiliser le t-butyl-hydroperoxyde, le cumène-hydroperoxyde, le di-iso-propyl-benzène-hydroperoxyde, le di-t-butyl-peroxyde, le t-butyl-cumyl-peroxyde, le dicumylperoxyde, le 1,3-bis-(t-butylperoxy-isopropyl)benzène, le benzoyl-peroxyde, l'iso-butyryl-peroxyde, le bis-3,5,5-triméthyl-hexanoyl-peroxyde ou le méthyl-éthyl-cétone-peroxyde. Le greffage d'un monomère polaire insaturé sur une polyoléfine est connu de l'homme du métier, pour plus de détails, on pourra se référer par exemple aux documents EP 689505**,** US 5235149**,** EP 658139**,** US 6750288 B2**,** US6528587 B2. La polyoléfine sur laquelle est greffé le monomère polaire insaturé peut être un polyéthylène, notamment le polyéthylène haute densité (PEHD) ou basse densité (PEBD), le polyéthylène basse densité linéaire (LLDPE), le polyéthylène très basse densité (VLDPE). Le polyéthylène peut être obtenu à l'aide d'un catalyseur Ziegler-Natta, Phillips ou de type métallocène ou encore par le procédé haute-pression. La polyoléfine peut être aussi un polypropylène, notamment un polypropylène iso- ou syndiotactique. Il peut s'agir aussi d'un copolymère de l'éthylène et du propylène de type EPR, ou un terpolymère de l'éthylène, d'un propylène et d'un diène de type EPDM. Il pourra s'agir par exemple des polyoléfines fonctionalisées commercialisées par la société ARKEMA sous les références OREVAC^{®} 18302, 18334, 18350, 18360, 18365, 18370, 18380, 18707, 18729, 18732, 18750, 18760, PP-C, CA100.

Le polymère sur lequel est greffé le monomère polaire insaturé peut aussi être un copolymère de l'éthylène et d'au moins un monomère polaire insaturé choisi parmi :
- les (méth)acrylates d'alkyle en C₁-C₈, notamment le (méth)acrylate de méthyle, d'éthyle, de propyle, de butyle, de 2-éthylhexyle, d'isobutyle, de cyclohexyle ;
- les esters vinyliques d'acides carboxyliques saturés, notamment l'acétate de vinyle ou le propionate de vinyle.
Il pourra s'agir par exemple des polyoléfines fonctionalisées commercialisées par la société ARKEMA sous les références OREVAC^{®} 18211, 18216 ou 18630.

### On décrit maintenant le tube multicouche sous ses deux formes

Sous une 1^{ère} forme, le tube multicouche comprend (dans l'ordre de l'intérieur vers l'extérieur du tube) disposées l'une contre l'autre :
- éventuellement une couche L₁ comprenant au moins un polymère fluoré, de préférence un PVDF ;
- une couche L₂ comprenant au moins un PVDF fonctionalisé ou le mélange selon l'invention ;
- éventuellement une couche L₃ d'un liant d'adhésion ;
- une couche L₄ comprenant au moins une polyoléfine éventuellement mélangée à au moins une polyoléfine fonctionalisée ;
- éventuellement une couche barrière L₅ ;
- éventuellement une couche L₆ comprenant au moins une polyoléfine, éventuellement en mélange avec au moins une polyoléfine fonctionalisée.

Sous une 2^{ème} forme, le tube multicouche comprend (dans l'ordre de l'intérieur vers l'extérieur du tube) disposées l'une contre l'autre :
- éventuellement une couche L'₁ comprenant au moins un polymère fluoré, de préférence un PVDF ;
- une couche L'₂ comprenant au moins un PVDF fonctionalisé ou le mélange de l'invention ;
- une couche barrière L'₃ comprenant un polymère barrière choisi parmi l'EVOH ou un mélange à base d'EVOH, le PGA ou le PDMK ;
- éventuellement une couche L'₄ d'un liant d'adhésion ;
- une couche L'₅ comprenant au moins une polyoléfine, éventuellement en mélange avec au moins une polyoléfine fonctionalisée ;
- éventuellement une couche barrière L'₆ ;
- éventuellement une couche L'₇ comprenant au moins une polyoléfine, éventuellement en mélange avec au moins une polyoléfine fonctionalisée.

La couche interne qui est en contact avec le fluide est soit la couche L₁ ou L'₁, soit la couche L₂ ou L'₂. Toutes les couches du tube sont de préférence concentriques. Le tube est de préférence cylindrique. Les couches adhèrent entre elles dans leur zone de contact respectives (c'est-à-dire que deux couches successives sont directement accolées l'une à l'autre). Les couches présentent de préférence chacune une épaisseur comprise entre 0,001 et 10000 mm, avantageusement entre 0,01 et 100 mm, de préférence entre 0,05 et 50 mm.

### avantages du tube multicouche

### Le tube multicouche :

- présente une résistance chimique vis-à-vis du fluide transporté (via les couches L₁/L'₁ et/ou L₂/L'₂);
- freine la migration des contaminants du milieu extérieur vers le fluide transporté ;
- freine la migration des contaminants (antioxydants, additifs, résidus de catalyse ou autres résidus,...) présents dans les polymères thermoplastiques ;
- freine la migration de l'oxygène ou des additifs présents dans le fluide transporté vers les couches des polymères thermoplastiques.

### La couche L₁ ou L'₁ éventuelle

Cette couche comprend au moins un polymère fluoré (non modifié par greffage par irradiation). De préférence, le polymère fluoré est un PVDF homo- ou copolymère ou bien un copolymère à base de VDF et de TFE du type EFEP.

### La couche L₂ ou L '₂

Cette couche comprend au moins un PVDF fonctionalisé ou bien le mélange selon l'invention. Elle a une fonction barrière et une fonction de protection chimique et mécanique des autres couches. De plus, lorsque le tube comprend une couche L₁ ou L'₁, elle a aussi une fonction de liant d'adhésion entre L₁ et L₃ ou entre L'₁ et L'₃.

### La couche L₃ éventuelle

La couche L₃ éventuelle est disposée entre L₂ et L₄ et a pour fonction de promouvoir l'adhésion entre ces deux couches. Le liant d'adhésion comprend au moins un polymère qui améliore l'adhésion entre ces couches.

Ce polymère peut être avantageusement une polyoléfine fonctionalisée éventuellement mélangée avec une polyoléfine avec laquelle elle est compatible. Dans le cas où on utilise un mélange, celui-ci comprend en poids de 1 à 99%, avantageusement de 10 à 90%, de préférence de 50 à 90%, d'au moins une polyoléfine fonctionalisée pour respectivement de 99 à 1%, avantageusement de 90 à 10%, de préférence de 10 à 50%, d'au moins une polyoléfine.

L'adhésion est considérablement renforcée si le monomère polaire insaturé qui est greffé sur le PVDF possède une ou plusieurs fonction(s) chimique(s) susceptible(s) de réagir avec les fonctions chimiques de la polyoléfine fonctionalisée. Par exemple, si l'on a greffé sur le PVDF un monomère qui comprend une fonction anhydride d'acide, la polyoléfine fonctionalisée pourra comprendre des fonctions époxyde ou bien hydroxy. Il s'agit par exemple d'un copolymère de l'éthylène et d'un époxyde insaturé, de préférence du (méth)acrylate de glycidyle, et éventuellement d'un (méth)acrylate d'alkyle en C₁-C₈ ou d'un ester vinylique d'acide carboxylique saturé. De la même façon, si l'on a greffé sur le PVDF un monomère polaire insaturé qui comprend une fonction époxyde ou hydroxy, la polyoléfine fonctionalisée pourra comprendre des fonctions anhydride d'acide. Il s'agit par exemple d'un copolymère de l'éthylène, d'un anhydride d'acide insaturé, de préférence l'anhydride malélque, et éventuellement d'un (méth)acrylate d'alkyle en C₁-C₈.

### La couche L'₃

La couche barrière L'₃ comprend un polymère barrière qui est choisi parmi l'EVOH ou un mélange à base d'EVOH, le poly(acide glycolique) (PGA) ou le polydiméthylcétène (PDMK).

De préférence, on greffe un monomère polaire insaturé sur le PVDF qui possède une ou plusieurs fonction(s) chimique(s) susceptible(s) de réagir avec les fonctions du polymère barrière. Par exemple, dans le cas de l'EVOH, une très bonne adhésion est obtenue si l'on greffe un anhydride d'acide insaturé sur le PVDF, de préférence l'anhydride maléique.

L'EVOH est aussi appelé copolymère éthylène-acétate de vinyle saponifié. Il s'agit d'un copolymère ayant une teneur en éthylène de 20 à 70% en moles, de préférence de 25 à 70% en moles, le degré de saponification de son composant acétate de vinyle n'étant pas inférieur à 95% en moles. L'EVOH constitue une bonne barrière à l'oxygène et aux hydrocarbures. Avantageusement, l'EVOH a un indice de fluidité à l'état fondu entre 0,5 et 100 g/10 min (230°C, 2,26 kg), de préférence entre 5 et 30. Il est entendu que l'EVOH peut contenir de faibles proportions d'autres ingrédients comonomères, y compris des alpha-oléfines comme le propylène, l'isobutène, l'alpha-octène, des acides carboxyliques insaturés ou leurs sels, des esters alkyliques partiels, des esters alkyliques complets, ...

Pour les mélanges à base d'EVOH, l'EVOH forme la matrice c'est-à-dire la phase continue et représente au moins 40% en poids du mélange et de préférence au moins 50%. L'autre ingrédient du mélange est choisi parmi les polyoléfines, les polyamides et les modifiants chocs. Le modifiant choc peut être choisi parmi :
a) les copolymères éthylène-(méth)acrylate d'alkyle fonctionalisés ;
b) les élastomères, de préférence les EPR, EPDM et NBR, ces élastomères pouvant être fonctionalisés ;
c) les copolymères à blocs S-B-S, linéaires ou en étoile, éventuellement hydrogénés (ils sont alors désignés par S-EB-S), ces copolymères pouvant être fonctionalisés ;

Le polydiméthylcétène (PDMK) peut être obtenu par la pyrolyse de l'anhydride isobutyrique tel qu'elle est envisagée dans la demande FR 2851562 qui est incorporée ici par référence. Un procédé pour aboutir au pôlydiméthylcétène est le suivant : a) on préchauffe à pression atmosphérique entre 300 et 340°C un mélange comprenant 1 à 50 % en volume d'anydride idobutyrique pour respectivement 99 à 50 % d'un gaz inerte, b) puis ce mélange est porté à une température comprise entre 400 et 550°C pendant un temps compris entre 0,05 et 10 s pour obtenir un mélange de diméthylcétène, de gaz inerte, d'acide isobutyrique et d'anhydride isobutyrique n'ayant pas réagi, c) le courant précédent est refroidi pour séparer le diméthylcétène et le gaz inerte de l'alcool isobutyrique et de l'anhydride isobutyrique, d) le diméthylcétène est absorbé dans un solvant de type hydrocarbure saturé ou insaturé, aliphatique ou alicyclique et substitué ou non substitué, puis on amorce la polymérisation du diméthylcétène à l'aide d'un système de catalyse cationique soluble dans ce solvant et comprenant un amorceur, un catalyseur et un co-catalyseur, e) à la fin de la polymérisation, on élimine le diméthylcétène qui n'a pas réagi et on sépare le PDMK du solvant et des restes du système de catalyse. Le catalyseur peut être par exemple AlBr₃, l'amorceur est par exemple le chlorure de tertiobutyle et l'o-chloranyl est par exemple le co-catalyseur.

Le PGA est un polymère renfermant en poids au moins 60%, avantageusement 70%, de préférence 80% des motifs (1) suivants :

(-O-CH₂-C(=O)-) (1)

Ce polymère peut être fabriqué en chauffant à une température comprise entre 120 et 250°C le 1,4-dioxane-2,5-dione en présence d'un catalyseur tel qu'un sel d'étain, comme par exemple SnCl₄. La polymérisation se fait en masse ou dans un solvant. Le PGA peut renfermer les autres motifs (2) à (6) suivants :

(-O-(CH₂)ₙ-O-C(=O)-(CH₂)ₘ-C(=O)) (2)

avec n entier compris de 1 à 10 et m entier compris entre 0 et 10 ; 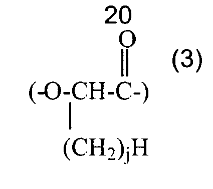 avec j entier compris entre 1 et 10 ; 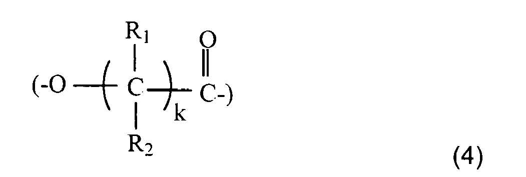 où k est un entier compris entre 2 et 10 et R₁ et R₂ désignent chacun indépendamment l'un de l'autre H ou un groupe alkyle en C₁-C₁₀;

(-OCH₂CH₂CH₂-O-C(=O)-) (5)

ou

(-O-CH₂-O-CH₂CH₂-) (6)

Le PGA est décrit dans le brevet européen EP 925915 B1**.**

### La couche L₄

La couche L₄ comprend au moins une polyoléfine éventuellement en mélange avec au moins une polyoléfine fonctionalisée compatible. Dans le cas du mélange, celui-ci comprend en poids de 1 à 99%, avantageusement de 10 à 90%, de préférence de 10 à 50%, de polyoléfine fonctionalisée pour respectivement de 99 à 1 %, avantageusement de 90 à 10%, de préférence de 50 à 90%, de polyoléfine.

Dans le cas où L₃ n'est pas présente, l'adhésion entre L₂ et L₄ est améliorée si on utilise pour L₄ un mélange tel que la polyoléfine fonctionalisée comprenne des fonctions chimiques susceptibles de réagir avec la ou les fonctions du monomère polaire insaturé greffé sur le PVDF.

### La couche L'₄ éventuelle

La couche L'₄ éventuelle est disposée entre L'₃ et L'₅ et a pour fonction de promouvoir l'adhésion entre ces deux couches. Le liant d'adhésion comprend au moins un polymère qui améliore l'adhésion entre les couches.

Ce polymère peut être avantageusement une polyoléfine fonctionalisée éventuellement mélangée avec une polyoléfine avec laquelle elle est compatible. Dans le cas où on utilise un mélange, celui-ci comprend en poids de 1 à 99%, avantageusement de 10 à 90%, de préférence de 50 à 90%, d'au moins une polyoléfine fonctionalisée pour respectivement de 99 à 1%, avantageusement de 90 à 10%, de préférence de 10 à 50%, d'au moins une polyoléfine.

### La couche barrière L₅ ou L'₆ éventuelle

La fonction de la couche barrière L₅ et L'₆ est d'empêcher la diffusion de composés chimiques de l'extérieur du tube vers l'intérieur ou l'inverse. Par exemple, elle permet d'éviter la contamination du fluide par des contaminants. L'oxygène et les produits chimiques comme les hydrocarbures par exemple sont des contaminants. Dans le cas plus spécifique des gaz, l'humidité peut être considéré comme un contaminant.

La couche barrière peut comprendre un polymère barrière comme par exemple :
- le PDMK ;
- l'EVOH ou un mélange à base d'EVOH ;
- le PGA.

La couche barrière est de préférence une gaine de métal. Outre sa fonction barrière, la gaine de métal a aussi pour fonction de renforcer la tenue mécanique du tube. Un autre intérêt d'utiliser une gaine de métal est de pouvoir couder ou déformer le tube sans que celui-ci ne reprenne sa position initiale sous l'effet des contraintes mécaniques engendrées par les couches de polymères thermoplastiques. Le métal peut être de l'acier, du cuivre ou de l'aluminium ou un alliage de l'aluminium. Il s'agit de préférence de l'aluminium ou d'un alliage de l'aluminium pour des raisons de tenue à la corrosion et de souplesse. On fabrique la gaine de métal selon l'un des procédés connu de l'homme du métier. On pourra se référer notamment aux documents suivants qui décrivent des procédés permettant de réaliser des tubes composites plastique/métal : US 6822205**,** EP 0581208 A1**,** EP 0639411 B1**,** EP 0823867 B1**,** EP 0920972 A1**.** De préférence, on utilise le procédé consistant à :
- conformer autour des couches de polymères thermoplastiques déjà coextrudées (c'est-à-dire L₁-L₄ ou L'₁-L'₅) une bande de métal présentant des bords longitudinaux coudés vers un côté commun et placés en appui les uns sur les autres en s'étendant sensiblement parallèlement à l'axe longitudinal du tube en plastique,
- puis les bords longitudinaux sont soudés ensemble. Ils forment donc un joint de soudure longitudinal.

Après avoir soudé les bords longitudinaux de la bande de métal, on obtient donc une gaine métallique tubulaire.

Pour améliorer l'adhésion de la couche barrière L₅, on peut disposer une couche de liant d'adhésion entre L₅ et L₄ et/ou entre L₅ et l'éventuelle L₆. De même pour la couche barrière L'₆, on peut disposer une couche de liant d'adhésion entre L'₆ et L'₅ et/ou entre L'₆ et l'éventuelle L'₇. Le liant d'adhésion est par exemple une polyoléfine fonctionalisée qui comprend des fonctions acide ou anhydride d'acide, par exemple de l'acide (méth)acrylique ou de l'anhydride maléique. Il peut s'agir par exemple d'un polyéthylène ou d'un polypropylène sur lequel est greffé de l'acide (méth)acrylique ou de l'anhydride maléique. On peut citer à titre d'exemple les polyoléfines fonctionalisées commercialisées par la société ARKEMA sous les références OREVAC 18302, 18334, 18350, 18360, 18365, 18370, 18380, 18707, 18729, 18732, 18750, 18760, PP-C, CA100 ou par la société UNIROYAL CHEMICAL sous la référence POLYBOND^{®} 1002 ou 1009 (polyéthylène sur lequel est greffé de l'acide acrylique).

### La couche L₆ ou L'₇ éventuelle

Le tube peut éventuellement comprendre une couche L₆ ou L'₇ comprenant au moins une polyoléfine. Les polyoléfines de L₄ et L₆ ou de L'₅ et L'₇ peuvent être identiques ou différentes. L₆ ou L'₇ ont pour fonction de protéger mécaniquement le tube (par ex. contre les chocs portés sur le tube lorsqu'il est installé) et aussi de renforcer mécaniquement le tube tout entier, ce qui peut permettre de réduire les épaisseurs des autres couches.

Grâce à ses bonnes propriétés thermomécaniques, le PEX est utilisé avantageusement pour L₄ et/ou pour L₆ ou bien pour L'₅ et/ou pour L'₇.

Chacune des couches du tube multicouche, notamment la ou les couches de polyoléfine, peut contenir des additifs habituellement utilisés en mélange avec des thermoplastiques, par exemple des antioxydants, des agents lubrifiants, des colorants, des agents ignifugeants, des charges minérales ou organiques, des agents antistatiques comme par exemple du noir de carbone ou des nanotubes de carbone. Le tube peut aussi comprendre d'autres couches, comme par exemple une couche extérieure isolante.

### exemple de tube sous la 1^{ère} forme préférée (best mode) :

Le tube comprend disposées l'une contre l'autre dans l'ordre indiqué (de l'intérieur vers l'extérieur du tube):
- une couche L₁ comprenant au moins un PVDF homo- ou • copolymère ;
- une couche L₂ comprenant un PVDF fonctionalisé ou le mélange selon l'invention, le monomère polaire insaturé qui est greffé sur le PVDF étant un anhydride d'acide carboxylique, de préférence l'anhydride maléique ;
- une couche L₃ comprenant au moins une polyoléfine fonctionalisée possédant des fonctions capables de réagir avec l'anhydride d'acide carboxylique, éventuellement mélangée avec une polyoléfine. Avantageusement, il s'agit d'une polyoléfine fonctionalisée possédant des fonctions époxyde ou hydroxy. Par exemple, il peut s'agir d'un copolymère de l'éthylène, d'un époxyde insaturé, de préférence le méthacrylate de glycidyle, et éventuellement d'un (méth)acrylate d'alkyle en C₁-C₈.
- une couche L₄ comprenant au moins un polyéthylène, de préférence de type PEX ;
- une couche barrière L₅ sous forme d'une gaine de métal, de préférence en aluminium ;
- une couche L₆ comprenant au moins un polyéthylène, de préférence de type PEX.

De préférence, une couche de liant d'adhésion est disposée entre L₅ et L₄ et/ou entre L₅ et L₆. De préférence, le liant d'adhésion est une polyoléfine fonctionalisée qui comprend des fonctions acide ou anhydride d'acide, par exemple de l'acide (méth)acrylique ou de l'anhydride maléique. Il peut s'agir par exemple d'un polyéthylène ou d'un polypropylène sur lequel est greffé de l'acide (méth)acrylique ou de l'anhydride maléique.

### exemple de tube sous la 2^{ème} forme préférée (best mode) :

Le tube comprend disposées l'une contre l'autre dans l'ordre indiqué (de l'intérieur vers l'extérieur du tube):
- une couche L'₁ comprenant au moins un PVDF homo- ou copolymère ;
- une couche L₂ comprenant un PVDF fonctionalisé ou le mélange selon l'invention, le monomère polaire insaturé qui est greffé sur le PVDF étant un anhydride d'acide carboxylique, de préférence l'anhydride maléique ;
- une couche barrière L'₃ comprenant un EVOH ou un mélange à base d'EVOH ;
- une couche L'₄ de liant d'adhésion ;
- une couche L'₅ comprenant au moins un polyéthylène, de préférence de type PEX ;
- une couche barrière L'₆ sous forme d'une gaine de métal, de préférence en aluminium ;
- une couche L'₇ comprenant au moins un polyéthylène, de préférence de type PEX.

De préférence, une couche de liant d'adhésion est disposée entre L'₆ et L'₅ et/ou entre L'₆ et L'₇. De préférence, le liant d'adhésion est une polyoléfine fonctionalisée qui comprend des fonctions acide ou anhydride d'acide, par exemple de l'acide (méth)acrylique ou de l'anhydride maléique. Il peut s'agir par exemple d'un polyéthylène ou d'un polypropylène sur lequel est greffé de l'acide (méth)acrylique ou de l'anhydride maléique.

### Obtention des tubes

Le tube peut être fabriqué par la technique de coextrusion. Cette technique s'appuie sur l'utilisation d'autant d'extrudeuses qu'il y a de couches à extruder.

Lorsque la polyoléfine est un PEX de type B (réticulation par groupements silanes), on commence par extruder la polyoléfine non réticulée. La réticulation est réalisée en plongeant les tubes extrudés dans des piscines d'eau chaude pour amorcer la réticulation. Avec un PEX de type A (réticulation à l'aide d'un amorceur radicalaire), la réticulation est réalisée à l'aide d'un amorceur radicalaire qui s'active thermiquement lors de l'extrusion. Avec un PEX de type C, on commence par extruder toutes les couches, puis on irradie le tube tout entier pour amorcer la réticulation du polyéthylène. L'irradiation se fait à l'aide d'un faisceau d'électrons à dose de 3 à 35 Mrad.

### Utilisation du tube

Le tube multicouche peut être utilisé pour le transport de différents fluides.

Le tube est approprié pour le transport de l'eau, notamment de l'eau chaude, en particulier le transport d'eau chaude en réseau. Le tube peut être utilisé pour le transport d'eau chaude de chauffage (température supérieure à 60°C, voire 90°C). Un exemple d'application intéressante est celle du chauffage radiant par le sol (plancher radiant) dans lequel le tube utilisé pour véhiculer l'eau chaude est disposé sous le sol ou le plancher. L'eau est chauffée par une chaudière et véhiculée à travers le tube. Un autre exemple est celui dans lequel le tube sert à véhiculer l'eau chaude vers un radiateur. Le tube peut donc être utilisé pour les systèmes de chauffage d'eau par rayonnement. L'invention est aussi relative à un système de chauffage en réseau comprenant le tube de l'invention.

La résistance chimique du tube est adaptée à une eau contenant des additifs chimiques (généralement en faibles quantités, inférieures à 1%) qui peuvent altérer les polyoléfines, notamment le polyéthylène, surtout à chaud. Ces additifs peuvent être des agents oxydants tels que le chlore et l'acide hypochloreux, des dérivés chlorés, de l'eau de javel, de l'ozone, ...

Pour les applications dans lesquelles l'eau qui circule est une eau potable, une eau destinée à des applications médicales ou pharmaceutiques ou un liquide biologique, il est préférable d'avoir une couche de polymère fluoré non modifié comme couche en contact avec l'eau (couche L₁ ou L'₁). Les microorganismes (bactéries, germes, moisissures, ...) ont peu tendance à se développer sur un polymère fluoré, notamment sur le PVDF. De plus, il est préférable que la couche en contact avec l'eau ou le liquide biologique soit une couche de polymère fluoré non modifié qu'une couche de polymère fluoré modifié pour éviter la migration de monomère insaturé non-greffé (libre) dans l'eau ou le liquide biologique.

Les propriétés barrière du tube le rende utilisable pour le transport d'eau dans les terrains pollués en freinant la migration des contaminants vers le fluide transporté. Les propriétés barrière sont aussi utiles pour éviter la migration de l'oxygène dans l'eau (DIN-4726), ce qui peut être néfaste dans le cas où le tube est utilisé pour transporter l'eau chaude de chauffage (la présence d'oxygène est source de corrosion des pièces en acier ou en fer de l'installation de chauffage). On souhaite également freiner la migration des contaminants présents dans la couche de polyoléfine (antioxydants, résidus de polymérisation,...) vers le fluide transporté.

Plus généralement, le tube multicouche est utilisable pour le transport de produits chimiques, notamment ceux susceptibles de dégrader chimiquement les polyoléfines.

Le tube multicouche peut aussi être utilisé pour le transport d'un gaz, notamment d'un gaz sous pression. Lorsque la polyoléfine est un polyéthylène de type PE80 ou un PE100, il est notamment adapté pour une tenue à des pressions supérieures à 10 bar, voire supérieures à 20 bar, voire encore supérieures à 30 bar. Le gaz peut être de différente nature. Il peut s'agir par exemple :
- d'un hydrocarbure gazeux (par exemple le gaz de ville, un alcane gazeux, notamment l'éthane, le propane, le butane, un alcène gazeux, notamment l'éthylène, le propylène, le butène),
- de l'azote,
- de l'hélium,
- de l'hydrogène,
- de l'oxygène,
- d'un gaz corrosif ou susceptible de dégrader le polyéthylène ou le polypropylène. Par exemple, il peut s'agir d'un gaz acide ou corrosif, tel que H₂S ou HCl ou HF.

On mentionnera aussi l'intérêt de ces tubes pour les applications liées à la climatisation dans lesquelles le gaz qui circule est un cryogène. Il peut s'agir de CO₂, notamment de CO₂ supercritique, de gaz HFC ou HCFC. La couche L₁/L'₁ éventuelle ou bien la couche L₂/L'₂ résistent bien à ces gaz car il s'agit de polymères fluorés. De préférence, le polymère fluoré de ces couches est du PVDF, car il résiste particulièrement bien. Il est possible que le cryogène condense en certains points du circuit de climatisation et soit liquide. Le tube multicouche peut donc aussi s'appliquer au cas où le gaz cryogène a condensé sous forme liquide.

### [Exemples]

### Produits utilisés :

**KYNAR^{®} 720 :** PVDF homopolymère de la société ARKEMA d'indice de fluidité 20 g/10 min (230°C, 5 kg) et de température de fusion 170°C ayant les caractéristiques suivantes :
Tc : 135°C
σy : 55 M Pa
v : 900 Pa s (230°C, 100 s⁻¹)
module d'Young : 2200 MPa

**OREVAC^{®} 18302** : polyéthylène de type LLDPE sur lequel est greffé de l'anhydride maléique d'indice de fluidité 1 g/10 min et de température de fusion 124°C

**LOTADER^{®} AX 8840**: copolymère de l'éthylène (92% poids) et de méthacrylate de glycidyle (8% poids) de la société ARKEMA ayant un indice de fluidité de 5 selon ASTM D-1238.

**PEX** : obtenu à partir d'un mélange de 95% poids de BORPEX^{®} ME-2510 et de 5% de MB-51, deux produits commercialisés par BOREALIS. La réticulation est réalisée par chauffage et est due à la présence de fonctions silane sur le polyéthylène.

**PVDF-1 :** copolymère VDF-HFP ayant 16% poids d'HFP avec :
Tc : 103°C
σy:18MPa
v : 900 Pa.s
module d'Young traction: 360 MPa

### Exemple 1 : préparation d'un PVDF fonctionalisé

Dans une extrudeuse de type Werner 40 on mélange à 190°C le PVDF-1 avec 2%poids d'anhydride maléique. Ce mélange se fait avec tous les puits de l'extrudeuse fermés, avec une vitesse de vis de 200 tours/minute et un débit de 60 kg/h.

Le produit qui est granulé à jonc est introduit dans un sac possédant une couche étanche en aluminium. Ce sac est irradié sous 20 kgray. Le produit après irradiation est de nouveau passé dans l'extrudeuse à 245°C sous un vide maximum et à 200 tours/minute. Le débit est de 25 kg/h. L'analyse infrarouge du produit après cette étape de dévolatilisation montre un taux de greffage de 0,31 % et un taux d'anhydride maléique libre de 300 ppm. Ce produit est appelé PVDF fonctionalisé 1.

### Exemple 2 : préparation d'un PVDF fonctionalisé

On reprend les conditions de l'exemple 1 mais avec le KYNAR^{®} 720 à la place du PVDF-1. L'analyse infrarouge du produit après dévolatilisation montre un taux de greffage de 0,50% et un taux d'anhydride maléique libre de 300 ppm. Ce produit est appelé PVDF fonctionalisé 2.

### Exemple 3 (comparatif)

On fabrique à l'aide d'une extrudeuse Mc Neil un tube multicouche (diamètre externe : 14 mm) présentant la structure suivante :
KYNAR^{®} 720 (130 µm) / PVDF fonctionalisé 2 (50 µm) / LOTADER^{®} AX 8840 (50 µm) / PEX (780 µm).

La couche de PEX est la couche externe. Toutes les couches adhèrent entre-elles. L'extrusion est réalisée à 40 m/minute dans les conditions suivantes :
- couche de PE : 230°C
- LOTADER^{®} AX 8840 : 250°C
- PVDF fonctionalisé : 250°C
- KYNAR^{®} 720 : 250°C

La couche de KYNAR^{®} assure une excellente protection chimique de la couche de PEX. L'adhésion entre les couches du PVDF fonctionalisé et de LOTADER^{®} 8840, 5 jours après l'extrusion est mesurée à 10 N/cm par pelage circonférentiel. L'adhésion est de type adhésive.

### Exemple 4 (comparatif)

On fabrique dans les mêmes conditions que dans l'exemple 3 un tube présentant la structure suivante :
KYNAR^{®} 720 (130 µm) / PVDF fonctionalisé 2 dilué à 50% dans un copolymère VDF-HFP contenant 16% d'HFP et présentant une viscosité à 230°C de 900 Pa.s à 100 s⁻¹ (50 µm) / LOTADER^{®} AX 8840 (50 µm) / PEX (780 µm).

L'extrusion est réalisée à 40 m/minute. La couche de PEX est la couche externe. Toutes les couches adhèrent entre-elles. L'adhésion entre les couches du mélange de PVDF et de LOTADER^{®} 8840 est mesurée à 20 N/cm par pelage circonférentiel après 5 jours. L'adhésion est de type adhésive.

### Exemple 5 (selon l'invention)

On fabrique dans les mêmes conditions que dans l'exemple 3 un tube présentant la structure suivante :
KYNAR^{®} 720 (130 µm) / PVDF fonctionalisé 1 (50 µm) / LOTADER^{®} AX 8840 (50 µm) / PEX (780 µm).

L'extrusion est réalisée à 40 m/minute. L'adhésion est mesurée à 60 N/cm par pelage circonférentiel après 5 jours. L'adhésion est de type cohésive dans la couche de LOTADER^{®} 8840.

**Tableau 1**

| **Ex.** | **nature de X dans une structure KYNAR^{®} 720 / X / LOTADER^{®} AX 8840 / PEX** | **adhésion** | |
|---|---|---|---|
| **3 (comp.)** | PVDF fonctionalisé 2 | adhésive | 10 N/cm |
| **4 (comp.)** | PVDF fonctionalisé 2 dilué à 50% dans un copolymère VDF-HFP contenant 16% d'HFP ayant une viscosité à 230°C de 900 Pa.s à 100 s⁻¹ | adhésive | 20 N/cm |
| **5 (inv.)** | PVDF fonctionalisé 1 | cohésive | 60 N/cm |

Dans les structures des exemples 3 à 5, le LOTADER^{®} AX 8840 sert de liant d'adhésion entre le PVDF fonctionalisé et le PEX.

## Revendications

1. Tube multicouche comprenant (dans l'ordre de l'intérieur vers l'extérieur du tube) disposées l'une contre l'autre :
• éventuellement une couche L₁ comprenant au moins un polymère fluoré, de préférence un PVDF ;
• une couche L₂ comprenant au moins un PVDF fonctionalisé, obtenu par le greffage par irradiation d'au moins un monomère polaire insaturé sur un PVDF ;
• éventuellement une couche L₃ d'un liant d'adhésion ;
• une couche L₄ comprenant au moins une polyoléfine éventuellement mélangée à au moins une polyoléfine fonctionnalisée ;
• éventuellement une couche barrière L₅ ;
• éventuellement une couche L₆ comprenant au moins une polyoléfine, éventuellement en mélange avec au moins une polyoléfine fonctionnalisée ;
**caractérisé en ce que** le PVDF sur lequel est greffé le monomère polaire insaturé est un copolymère du VDF dont la teneur en poids est d'au moins 50%, de préférence au moins 75% et d'au moins un monomère copolymérisable avec le VDF, présentant les caractéristiques suivantes :
• une température de cristallisation Tc (mesurée par DSC selon la norme ISO 11357-3) allant de 50 et 120°C, de préférence de 85 à 110°C ;
• une contrainte au seuil σy allant de 10 à 40 MPa, de préférence de 10 à 30 MPa;
• une viscosité v à l'état fondu (mesurée au rhéomètre capillaire à 230°C à 100 s⁻¹) allant de 100 à 1500 Pa s, de préférence de 400 à 1200 Pa s.

2. Tube multicouche comprenant (dans l'ordre de l'intérieur vers l'extérieur du tube) disposées l'une contre l'autre :
• éventuellement une couche L' 1 comprenant au moins un polymère fluoré, de préférence un PVDF ;
• une couche L'₂ comprenant au moins un PVDF fonctionnalisé, obtenu par le greffage par irradiation d'au moins un monomère insaturé sur un PVDF;
• une couche barrière L'₃ comprenant un polymère barrière choisi parmi l'EVOH ou un mélange à base d'EVOH, le PGA ou le PDMK ;
• éventuellement une couche L'₄ d'un liant d'adhésion ;
• une couche L'₅ comprenant au moins une polyoléfine, éventuellement en mélange avec au moins une polyoléfine fonctionnalisée ;
• éventuellement une couche barrière L'₆ ;
• éventuellement une couche L'₇ comprenant au moins une polyoléfine, éventuellement en mélange avec au moins une polyoléfine fonctionnalisée ;
**caractérisé en ce que** le PVDF sur lequel est greffé le monomère polaire insaturé est un copolymère du VDF dont la teneur en poids est d'au moins 50%, de préférence au moins 75% et d'au moins un monomère copolymérisable avec le VDF, présentant les caractéristiques suivantes :
• une température de cristallisation Tc (mesurée par DSC selon la norme ISO 11357-3) allant de 50 et 120°C, de préférence de 85 à 110°C ;
• une contrainte au seuil σy allant de 10 à 40 MPa, de préférence de 10 à 30 MPa;
• une viscosité v à l'état fondu (mesurée au rhéomètre capillaire à 230°C à 100 s⁻¹) allant de 100 à 1500 Pa s, de préférence de 400 à 1200 Pa s.

3. Tube multicouche selon l'une des revendications 1 ou 2 **caractérisé en ce que** la couche barrière L₅ ou L'₆ est une gaine de métal, de préférence en aluminium.

4. Tube multicouche selon la revendication 1 comprenant disposées l'une contre l'autre dans l'ordre indiqué (de l'intérieur vers l'extérieur du tube):
• une couche L₁ comprenant au moins un PVDF homo- ou copolymère ;
• une couche L₂ comprenant au moins un PVDF fonctionnalisé, obtenu par le greffage par irradiation d'au moins un anhydride d'acide carboxylique insaturé, de préférence l'anhydride maléique, sur un PVDF ;
• une couche L₃ comprenant au moins une polyoléfine fonctionnalisée possédant des fonctions capables de réagir avec l'anhydride d'acide carboxylique, éventuellement mélangée avec une polyoléfine ;
• une couche L₄ comprenant au moins un polyéthylène, de préférence de type PEX ;
• une couche barrière L₅ sous forme d'une gaine de métal, de préférence en aluminium ;
• une couche L₆ comprenant au moins un polyéthylène, de préférence de type PEX .

5. Tube multicouche selon la revendication 2 comprenant disposées l'une contre l'autre dans l'ordre indiqué (de l'intérieur vers l'extérieur du tube):
• une couche L'₁ comprenant au moins un PVDF homo- ou copolymère ;
• une couche L'₂ comprenant au moins un PVDF fonctionnalisé, obtenu par le greffage par irradiation d'au moins un anhydride d'acide carboxylique insaturé, de préférence l'anhydride maléique, sur un PVDF;
• une couche barrière L'₃ comprenant un EVOH ou un mélange à base d'EVOH ;
• une couche L'₄ de liant d'adhésion ;
• une couche L'₅ comprenant au moins un polyéthylène, de préférence de type PEX ;
• une couche barrière L'₆ sous forme d'une gaine de métal, de préférence en aluminium ;
• une couche L'₇ comprenant au moins un polyéthylène, de préférence de type PEX.

6. Tube multicouche selon l'une quelconque des revendications précédentes **caractérisé en ce que** le PVDF sur lequel est greffé le monomère polaire insaturé présente avant greffage un module d'Young en traction allant de 200 à 1000 MPa, de préférence de 200 à 600 MPa.

7. Tube multicouche selon l'une quelconque des revendications précédentes **caractérisé en ce qu'**une couche de liant d'adhésion est disposée
- entre L₅ et L₄ et/ou entre L₅ et L₆
- ou bien entre L'₆ et L'₅ et/ou entre L'₆ et L'₇.

8. Tube selon l'une quelconque des revendications précédentes **caractérisé en ce que** le PVDF fonctionnalisé de la couche L₂ ou de la couche L'₂ est mélangé avec un autre PVDF homo- ou copolymère.

9. Tube selon la revendication 8 **caractérisé en ce que** le PVDF fonctionalisé et le PVDF sont compatibles et que le mélange ne présente qu'une seul pic de fusion par DSC.

10. Tube selon l'une des revendications 8 ou 9 **caractérisé en ce que** le PVDF est un copolymère du VDF et d'au moins un monomère copolymérisable avec le VDF ayant une teneur en poids en VDF d'au moins 50%, de préférence d'au moins 75% présentant les caractéristiques suivantes :
• une température de cristallisation Tc (mesurée par DSC selon la norme ISO 11357-3) allant de 50 et 120°C, de préférence de 85 à 110°C ;
• une contrainte au seuil σy allant de 10 à 40 MPa, de préférence de 10 à 30 MPa;
• une viscosité v à l'état fondu (mesurée au rhéomètre capillaire à 230°C à 100 s⁻¹) allant de 100 à 1500 Pa s, de préférence de 400 à 1200 Pa s.

11. Tube selon la revendication 10 **caractérisé en ce que** le PVDF présente un module d'Young en traction (ASTM D-638) qui va de préférence de 200 à 1000 MPa, de préférence de 200 à 600 MPa.

12. Utilisation d'un tube tel que défini à l'une quelconque des revendications 1 à 11 1 pour le transport de l'eau, notamment de l'eau chaude, de produits chimiques, d'un gaz.

13. Utilisation d'un tube tel que défini à l'une quelconque des revendications 1 à 11 1 pour véhiculer l'eau chaude dans un chauffage radiant par le sol (plancher radiant) ou pour véhiculer l'eau chaude vers un élément radiant.

14. Utilisation d'un tube tel que défini à l'une quelconque des revendications 1 à 11 dans les systèmes de chauffage par rayonnement.

15. Utilisation selon la revendication 12 **caractérisée en ce que** le gaz est un hydrocarbure gazeux, l'azote, l'hélium, l'hydrogène, l'oxygène, un gaz corrosif ou susceptible de dégrader le polyéthylène ou le polypropylène, un cryogène.

16. Système de chauffage par rayonnement comprenant au moins un tube selon l'une quelconque des revendications 1 à 11.

## Claims

1. Multilayer pipe comprising (in order from the inside of the pipe outwards), placed against one another:
• optionally, a layer L₁ comprising at least one fluoropolymer, preferably a PVDF;
• a layer L₂ comprising at least one functionalized PVDF, obtained by radiation-grafting at least one unsaturated polar monomer onto a PVDF;
• optionally, a layer L₃ of an adhesion tie;
• a layer L₄ comprising at least one polyolefin optionally blended with at least one functionalized polyolefin;
• optionally, a barrier layer L₅; and
• optionally, a layer L₆ comprising at least one polyolefin, optionally blended with at least one functionalized polyolefin,
**characterized in that** the PVDF onto which the unsaturated polar monomer is grafted is a copolymer of VDF, the weight content of which is at least 50%, preferably at least 75%, and at least one monomer copolymerizable with VDF, having the following characteristics:
• a crystallization temperature T_{c} (measured by DSC according to ISO 11357-3 standard) ranging from 50 to 120°C, preferably 85 to 110°C;
• a yield strength σ_{Y} ranging from 10 to 40 MPa, preferably 10 to 30 MPa; and
• a melt viscosity η (measured by capillary rheometry at 230°C/100 s⁻¹) ranging from 100 to 1500 Pa.s, preferably 400 to 1200 Pa.s.

2. Multilayer pipe comprising (in order from the inside of the pipe outwards) placed against one another:
• optionally, a layer L'₁ comprising at least one fluoropolymer, preferably a PVDF;
• a layer L'₂ comprising at least one functionalized PVDF, obtained by radiation-grafting at least one unsaturated monomer onto a PVDF;
• a barrier layer L'₃ comprising a barrier polymer chosen from EVOH or an EVOH-based blend, PGA or PDMK;
• optionally, a layer L'₄ of an adhesion tie;
• a layer L'₅ comprising at least one polyolefin, optionally blended with at least one functionalized polyolefin;
• optionally, a barrier layer L'₆; and
• optionally, a layer L'₇ comprising at least one polyolefin, optionally blended with at least one functionalized polyolefin,
**characterized in that** the PVDF onto which the unsaturated polar monomer is grafted is a copolymer of VDF, the weight content of which is at least 50%, preferably at least 75%, and at least one monomer copolymerizable with VDF, having the following characteristics:
• a crystallization temperature T_{c} (measured by DSC according to ISO 11357-3 standard) ranging from 50 to 120°C, preferably 85 to 110°C;
• a yield strength _{Y} ranging from 10 to 40 MPa, preferably 10 to 30 MPa; and
• a melt viscosity η (measured by capillary rheometry at 230°C/100 s⁻¹) ranging from 100 to 1500 Pa.s, preferably 400 to 1200 Pa.s.

3. Multilayer according to either of Claims 1 and 2, **characterized in that** the barrier layer L₅ or L'₆ is a metal sheath, preferably made of aluminium.

4. Multilayer pipe comprising, placed against one another in the order indicated (from the inside of the pipe outwards):
• a layer L₁ comprising at least one PVDF homopolymer or copolymer;
• a layer L₂ comprising at least one functionalized PVDF, obtained by radiation-grafting at least one unsaturated carboxylic acid anhydride, preferably maleic anhydride, onto a PVDF;
• a layer L₃ comprising at least one functionalized polyolefin possessing functional groups capable of reacting with the carboxylic acid anhydride, optionally blended with a polyolefin;
• a layer L₄ comprising at least one polyethylene, preferably of PEX type;
• a barrier layer L₅ in the form of a metal sheath, preferably made of aluminium;
and
• a layer L₆ comprising at least one polyethylene, preferably of PEX type, **characterized in that** the PVDF onto which the unsaturated acid anhydride is grafted is a copolymer of VDF, the weight content of which is at least 50%, preferably at least 75%, and at least one monomer copolymerizable with VDF, having the following characteristics:
• a crystallization temperature T_{c} (measured by DSC according to ISO 11357-3 standard) ranging from 50 to 120°C, preferably 85 to 110°C;
• a yield strength _{Y} ranging from 10 to 40 MPa, preferably 10 to 30 MPa; and
• a melt viscosity η (measured by capillary rheometry at 230°C/100 s⁻¹) ranging from 100 to 1500 Pa.s, preferably 400 to 1200 Pa.s.

5. Multilayer pipe comprising, placed against one another in the order indicated (from the inside of the pipe outwards):
• a layer L'₁ comprising at least one PVDF homopolymer or copolymer;
• a layer L'₂ comprising at least one functionalized PVDF, obtained by radiation-grafting at least one unsaturated carboxylic acid anhydride, preferably maleic anhydride, onto a PVDF;
• a barrier layer L'₃ comprising an EVOH or an EVOH-based blend;
• an adhesion tie layer L'₄;
• a layer L'₅ comprising at least one polyethylene, preferably of PEX type;
• a barrier layer L'₆ in the form of a metal sheath, preferably made of aluminium;
and
• a layer L'₇ comprising at least one polyethylene, preferably of PEX type, **characterized in that** the PVDF onto which the unsaturated acid anhydride is grafted is a copolymer of VDF, the weight content of which is at least 50%, preferably at least 75%, and at least one monomer copolymerizable with VDF, having the following characteristics:
• a crystallization temperature T_{c} (measured by DSC according to ISO 11357-3 standard) ranging from 50 to 120°C, preferably 85 to 110°C;
• a yield strength _{Y} ranging from 10 to 40 MPa, preferably 10 to 30 MPa; and
• a melt viscosity η (measured by capillary rheometry at 230°C/100 s⁻¹) ranging from 100 to 1500 Pa.s, preferably 400 to 1200 Pa.s.

6. Multilayer pipe according to any one of the preceding claims, **characterized in that** the PVDF onto which the unsaturated polar monomer is grafted has, before grafting, a tensile Young's modulus ranging from 200 to 1000 MPa, preferably 200 to 600 MPa.

7. Multilayer pipe according to any one of the preceding claims, **characterized in that** the adhesion tie layer is placed:
• between L₅ and L₄ and/or between L₅ and L₆;
• or else between L'₆ and L'₅ and/or between L'₆ and L'₇.

8. Pipe according to any one of the preceding claims, **characterized in that** the functionalized PVDF of the layer L₂ or of the layer L'₂ is blended with another PVDF homopolymer or copolymer.

9. Pipe according to Claim 8, **characterized in that** the functionalized PVDF and the PVDF are compatible and **in that** the blend has only a single DSC melting peak.

10. Pipe according to either of Claims 8 and 9, **characterized in that** the PVDF is a copolymer of VDF and at least one monomer copolymerizable with VDF, said copolymer having a VDF weight content of at least 50%, preferably at least 75%, exhibiting the following characteristics:
• a crystallization temperature T_{c} (measured by DSC according to ISO 11357-3 standard) ranging from 50 to 120°C, preferably 85 to 110°C;
• a yield strength _{Y} ranging from 10 to 40 MPa, preferably 10 to 30 MPa; and
• a melt viscosity η (measured by capillary rheometry at 230°C/100 s⁻¹) ranging from 100 to 1500 Pa.s, preferably 400 to 1200 Pa.s.

11. Pipe according to Claim 10, **characterized in that** the PVDF has a tensile Young's modulus (ASTM D-638) that preferably ranges from 200 to 1000 MPa, preferably 200 to 600 MPa.

12. Use of a pipe as defined in any one of claims 1 to 11 for transporting water, especially hot water, chemicals or a gas.

13. Use of a pipe as defined in any one of claims 1 to 11 for conveying hot water in an underfloor heating system or for conveying hot water to a radiating element.

14. Use of a pipe as defined in any one of claims 1 to 11 in radiation heating systems.

15. Use according to Claim 12, **characterized in that** the gas is a gaseous hydrocarbon, nitrogen, helium, hydrogen, oxygen or a gas that is corrosive or liable to degrade polyethylene or polypropylene, or a cryogen.

16. Radiation heating system comprising at least one pipe according to any one of Claims 1 to 11.

## Patentansprüche

1. Mehrschichtrohr, das (in der Reihenfolge von innen nach außen) übereinander angeordnet aufweist:
gegebenenfalls eine Schicht L₁, die mindestens ein fluoriertes Polymer und vorzugsweise PVDF umfasst;
eine Schicht L₂, die mindestens ein funktionalisiertes PVDF umfasst, das durch Pfropfen mindestens eines ungesättigten polaren Monomers auf ein PVDF mit Hilfe von Strahlung gebildet wird;
gegebenenfalls eine Schicht L₃ eines Haftbinders;
eine Schicht L₄, die mindestens ein Polyolefin gegebenenfalls im Gemisch mit mindestens einem funktionalisierten Polyolefin umfasst;
gegebenenfalls eine Barriereschicht L₅;
gegebenenfalls eine Schicht L₆, die mindestens ein Polyolefin gegebenenfalls im Gemisch mit mindestens einem funktionalisierten Polyolefin umfasst;
**dadurch gekennzeichnet, dass** das PVDF, auf das das ungesättigte polare Monomer gepfropft wird, ein Copolymer von VDF, dessen Gewichtsanteil mindestens 50 % und vorzugsweise mindestens 75 % beträgt, und mindestens eines mit VDF copolymerisierbaren Monomers ist, das die folgenden Eigenschaften aufweist:
eine Kristallisationstemperatur Tc (mit DSC nach der Norm ISO 11357-3 ermittelt) im Bereich von 50 bis 120 °C und vorzugsweise im Bereich von 85 bis 110 °C;
eine Streckspannung σy im Bereich von 10 bis 40 MPa und vorzugsweise im Bereich von 10 bis 30 MPa,
eine Viskosität v im geschmolzenen Zustand (gemessen mit dem Kapillarrheometer bei 230 °C und 100 s⁻¹) im Bereich von 100 bis 1500 Pa.s und vorzugsweise im Bereich von 400 bis 1200 Pa.s.

2. Mehrschichtrohr, das (in der Reihenfolge von innen nach außen) übereinander angeordnet aufweist:
gegebenenfalls eine Schicht L'₁, die mindestens ein fluoriertes Polymer und vorzugsweise PVDF umfasst;
eine Schicht L'₂, die mindestens ein funktionalisiertes PVDF umfasst, das durch Pfropfen mindestens eines ungesättigten Monomers auf ein PVDF mit Hilfe von Strahlung gebildet wird;
eine Barriereschicht L'₃, die ein Barrierepolymer umfasst, das unter EVOH oder einem Gemisch auf der Basis von EVOH, PGA oder PDMK ausgewählt ist;
gegebenenfalls eine Schicht L'₄ eines Haftbinders;
eine Schicht L'₅, die mindestens ein Polyolefin gegebenenfalls im Gemisch mit mindestens einem funktionalisierten Polyolefin umfasst;
gegebenenfalls eine Barriereschicht L'₆;
gegebenenfalls eine Schicht L'₇, die mindestens ein Polyolefin gegebenenfalls im Gemisch mit mindestens einem funktionalisierten Polyolefin umfasst;
**dadurch gekennzeichnet, dass** das PVDF, auf das das ungesättigte polare Monomer gepfropft wird, ein Copolymer von VDF, dessen Gewichtsanteil mindestens 50 % und vorzugsweise mindestens 75 % beträgt, und mindestens eines mit VDF copolymerisierbaren Monomers ist, das die folgenden Eigenschaften aufweist:
eine Kristallisationstemperatur Tc (mit DSC nach der Norm ISO 11357-3 ermittelt) im Bereich von 50 bis 120 °C und vorzugsweise im Bereich von 85 bis 110 °C;
eine Streckspannung σy im Bereich von 10 bis 40 MPa und vorzugsweise im Bereich von 10 bis 30 MPa,
eine Viskosität v im geschmolzenen Zustand (gemessen mit dem Kapillarrheometer bei 230 °C und 100 s⁻¹) im Bereich von 100 bis 1500 Pa.s und vorzugsweise im Bereich von 400 bis 1200 Pa.s.

3. Mehrschichtrohr nach einem der Ansprüche 1 oder 2, **dadurch gekennzeichnet, dass** die Barriereschicht L₅ oder L'₆ eine metallische Umhüllung, vorzugsweise eine Umhüllung aus Aluminium ist.

4. Mehrschichtrohr nach Anspruch 1, das in der angegebenen Reihenfolge (von innen nach außen) übereinander angeordnet aufweist:
eine Schicht L₁, die mindestens ein PVDF-Homopolymer oder PVDF-Copolymer umfasst;
eine Schicht L₂, die mindestens ein funktionalisiertes PVDF umfasst, das durch Pfropfen mindestens eines ungesättigten Carbonsäureanhydrids, vorzugsweise Maleinsäureanhydrid, auf ein PVDF mit Hilfe von Strahlung gebildet wird;
eine Schicht L₃, die mindestens ein funktionalisiertes Polyolefin, das Funktionen aufweist, die befähigt sind, mit dem Carbonsäureanhydrid zu reagieren, gegebenenfalls im Gemisch mit einem Polyolefin umfasst;
eine Schicht L₄, die mindestens ein Polyethylen vorzugsweise vom Typ PEX umfasst;
eine Barriereschicht L₅ in der Form einer metallischen Umhüllung, vorzugsweise einer Umhüllung aus Aluminium;
eine Schicht L₆, die mindestens ein Polyethylen vorzugsweise vom Typ PEX umfasst.

5. Mehrschichtrohr nach Anspruch 2, das in der angegebenen Reihenfolge (von innen nach außen) übereinander angeordnet aufweist:
eine Schicht L'₁, die mindestens ein PVDF-Homopolymer oder PVDF-Copolymer umfasst;
eine Schicht L'₂, die mindestens ein funktionalisiertes PVDF umfasst, das durch Pfropfen mindestens eines ungesättigten Carbonsäureanhydrids, vorzugsweise Maleinsäureanhydrid, auf ein PVDF mit Hilfe von Strahlung gebildet wird;
eine Barriereschicht L'₃, die EVOH oder ein Gemisch auf der Basis von EVOH umfasst;
eine Schicht L'₄ eines Haftbinders;
eine Schicht L'₅, die mindestens ein Polyethylen vorzugsweise vom Typ PEX umfasst;
eine Barriereschicht L'₆ in der Form einer metallischen Umhüllung, vorzugsweise einer Umhüllung aus Aluminium;
eine Schicht L'₇, die mindestens ein Polyethylen vorzugsweise vom Typ PEX umfasst.

6. Mehrschichtrohr nach einem der vorhergehenden Ansprüche, **dadurch gekennzeichnet, dass** das PVDF, auf das das ungesättigte polare Monomer gepfropft wird, vor dem Pfropfen einen Zug-Elastizitätsmodul im Bereich von 200 bis 1000 MPa und vorzugsweise im Bereich von 200 bis 600 MPa aufweist.

7. Mehrschichtrohr nach einem der vorhergehenden Ansprüche, **dadurch gekennzeichnet, dass** eine Haftbinderschicht angeordnet ist:
zwischen L₅ und L₄ und/oder L₅ und L₆;
oder zwischen L'₆ und L'₅ und/oder L'₆ und L'₇.

8. Rohr nach einem der vorhergehenden Ansprüche, **dadurch gekennzeichnet, dass** das funktionalisierte PVDF der Schicht L₂ oder der Schicht L'₂ mit einem anderen PVDF-Homopolymer oder PVDF-Copolymer vermischt ist.

9. Rohr nach Anspruch 8, **dadurch gekennzeichnet, dass** das funktionalisierte PVDF und das PVDF kompatibel sind und das Gemisch im DSC nur einen einzigen Schmelzpeak aufweist.

10. Rohr nach einem der Ansprüche 8 oder 9, **dadurch gekennzeichnet, dass** das PVDF ein Copolymer von VDF und mindestens eines mit VDF copolymerisierbaren Monomers ist, bei dem der Gewichtsanteil des VDF mindestens 50 % und vorzugsweise mindestens 75 % beträgt, das die folgenden Eigenschaften aufweist:
eine Kristallisationstemperatur Tc (mit DSC nach der Norm ISO 11357-3 ermittelt) im Bereich von 50 bis 120 °C und vorzugsweise 85 bis 110 °C;
eine Streckspannung σy im Bereich von 10 bis 40 MPa und vorzugsweise im Bereich von 10 bis 30 MPa;
eine Viskosität v im geschmolzenen Zustand (gemessen mit dem Kapillarrheometer bei 230°C und 100 s⁻¹) im Bereich von 100 bis 1500 Pa.s und vorzugsweise im Bereich von 400 bis 1200 Pa.s.

11. Rohr nach Anspruch 10, **dadurch gekennzeichnet, dass** das PVDF einen Zug-Elastizitätsmodul (ASTM D-638) aufweist, der vorzugsweise im Bereich von 200 bis 1000 MPa und vorzugsweise im Bereich von 200 bis 600 MPa liegt.

12. Verwendung eines Rohrs, wie es in einem der Ansprüche 1 bis 11 definiert ist, für den Transport von Wasser, insbesondere heißem Wasser, chemischen Produkten, einem Gas.

13. Verwendung eines Rohr, wie es in einem der Ansprüche 1 bis 11 definiert ist, um heißes Wasser in einer Strahlungsheizung für den Boden (Fußbodenheizung) zu transportieren oder um heißes Wasser zu einem Strahlungsheizelement zu transportieren.

14. Verwendung eines Rohrs, wie es in einem der Ansprüche 1 bis 11 definiert ist, in Strahlungsheizsystemen.

15. Verwendung nach Anspruch 12, **dadurch gekennzeichnet, dass** es sich bei dem Gas um einen gasförmigen Kohlenwasserstoff, Stickstoff, Helium, Wasserstoff, Sauerstoff, ein korrosives Gas oder ein Gas, das befähigt ist, Polyethylen oder Polypropylen zu zerstören, oder ein Kryogen handelt.

16. Strahlungsheizsystem, das mindestens ein Rohr nach einem der Ansprüche 1 bis 11 umfasst.
